# EUROPEAN PATENT SPECIFICATION

(11) **EP 2 365 766 B1**
(45) Date of publication and mention of the grant of the patent: **03.09.2014**
(21) Application number: 09744646.2
(22) Date of filing: 06.10.2009
(51) Int. Cl.: A47B 23/04, F16M 13/00

(54) **PORTABLE STAND FOR LAPTOP COMPUTER**
TRAGBARES STATIV FÜR LAPTOP
SUPPORT PORTATIF POUR ORDINATEUR PORTABLE

(30) Priority: 09.10.2008 IT MI20081786
(43) Date of publication of application: 21.09.2011
(73) Proprietor: Pitteri, Silvio, 40134 Bologna (IT)
(72) Inventor: Pitteri, Silvio, 40134 Bologna (IT)
(74) Representative: Zanoli, Enrico
(86) International application number: PCT/EP2009/062984
(87) International publication number: WO 2010/040754

(56) References cited:
- EP-A- 0 332 762
- GB-A- 2 248 546
- US-A- 4 925 144
- US-A1- 2003 079 661
- US-A1- 2007 120 034

## Description

The present invention relates to a portable stand for a laptop computer to be used by a person who is sitting, or reclined.

It is known to be difficult for a user who is sitting or lying on a bed to use a laptop computer without a supporting surface for said laptop computer. In said situation, the laptop computer must be rested on the legs and the abdomen or the lower body of the person sitting or lying, which is an inconvenience due both to the weight of the laptop computer and the heat it gives off, causing perspiration and possibly pain to the abdomen, and due to the fact that it imposes an unnatural and uncomfortable position for the user. In addition, the laptop computer screen can be an excessively long way from the user's eyes, therefore the user tends to move closer by bending forward, thus assuming a hunched position.

The United States patent application US 2005/0263666 A1 describes a support for laptop computer featuring an inclined supporting surface so that the keyboard faces downwards, and in which means are provided to prevent the laptop computer from falling off said surface.

The United States patent application US2007/0012827 A1 describes a support for a laptop computer in which the supporting panel for sustaining the laptop computer can be inclined as required and telescopically adjustable legs are provided.

The United States patent application US2007/0120034 A1 describes a support for laptop computer or book comprising an X-shaped mounting platform made in one piece and capable to bear by means of clamps the laptop computer or book. Such clamps are placed on the X-shaped mounting platform and supposed to act by pressing on the corners or edges of the laptop computer or book, so that the dimensions of the X-shaped mounting platform should be larger than, or at least comparable to, those of a large laptop computer or open book, thus rather bulky. Moreover, as the computer needs air for cooling, the X-shaped mounting platform may require a particular concave shape for permitting air to flow therethrough and reaching the bottom part of the laptop computer, which in general is the part that mostly has to be cooled: the concave shape of the mounting platform is an added difficulty to the manufacture of the stand. What is more, even if the X-shaped mounting platform is detached from the rest of the support, it is not very easy to transport it. Moreover, a complicate slide-clamp architecture is used for assuring the laptop computer or book to the support. Even without taking in consideration the X-shaped mounting platform, the support is not foldable so as to occupy a reduced space and even be placed in a pocket.

The United States patent application US2008/0283710 A1 presents a bulky workstation for a user in a supine position, such that the user is under the structure.

The United States patent application US2003/0079661 presents a big collapsible table, supportable by the floor, which however maintains rather large dimensions and cannot be placed in a small space or pocket.

The UK patent application GB 2248546 A presents a bulky reading frame, which is supportable by the floor.

Also EP 0332762 presents a support which cannot be collapsed so as to have the space it occupies significantly reduced and be inserted in a pocket.

An adjustable support for laptop computer is known which exploits the principle of common towel stands, with a wide base from which a vertical body develops, for example with elongated arms to support the laptop computer; the base of said support rests on the floor, near the user.

Although advantageous from various points of view, the supports according to the known art require a large number of components which are also excessively bulky.

Above all, however, there appears to be a basic contradiction in the solutions presented: although designed to be combined with laptop computers, the known supports require elaborate bulky structures which are therefore difficult to transport.

The technical problem underlying the present invention is that of providing a portable stand for a laptop computer to be used by a person sitting or reclined, said portable stand being a simple easily transportable structure, in particular collapsible so as to be insertable in a much reduced space and even a pocket.

In accordance with the invention, said problem is solved by a portable stand for a laptop computer to be used by a person who is sitting, lying or reclined, characterised by comprising an upturned U-shaped framework for supporting a laptop computer above the legs, or lower body, or abdomen of said person, wherein said framework comprises a horizontal transversal member supported by two uprights, said horizontal transversal member supporting at least one rotatable supporting arm for sustaining said laptop computer, wherein said framework comprises elongated components which are coupled two by two by means of coupling elements.

The use of such a framework minimises the space required by the object and ensures greater transportability, in addition to considerably reducing the weight.

The fact that the computer can be placed above the legs, abdomen, or lower body of the user permits that no contact between the legs, abdomen, or lower body of the user and the laptop computer is required, so as to prevent the aforementioned inconvenience due both to the weight of the laptop computer and the heat of the laptop computer.

The elongated components preferably consist of bars, plates, sheets or sections made of metal or plastics, or bars, strips, rods, slats or sticks made of a natural material such as wood, or wood-metal or even wood-plastic combinations. The elongated components can also be modular components and mutually interchangeable. Advantageously, the elongated components are fundamentally flattened.

In particular, thanks to the use of rotatable arms for sustaining the laptop computer, there is no need of using a surface for bearing the laptop computer. At the same time, the possibility of rotating the supporting arms and also elongated members is such that the portable stand may occupy a much reduced space when it is not used.

Moreover, the fact that the laptop computer is sustained by arms, instead than by a bulky surface-like component or wall-like component, permits to obtain an easy cooling of the laptop computer.

The supporting arms can be blocked by means of bolts, e.g. by fastening the bolts, so that to block the rotation of the supporting arms.

The use of elongated components reduces the weight of the structure. The use of flattened components permits to further reduce the space required and permits to put the flattened components adjacent each other so as to save as much space as possible.

The use of rods with substantially prismatic shape with rectangular cross section is advantageous, because it permits them to be placed adjacent so minimizing the space required.

Preferably, some or all the coupling elements are such as to maintain the relative elongated components rigidly fixed during use of the stand. Preferably, some or all the coupling elements can be reconfigured so as to permit a relative rotation between the relative elongated components. Preferably, some or all the coupling elements can be released so as to permit separation of the relative elongated components.

The coupling elements are preferably obtained by bolts, for example of the screw-nut type, with a washer positioned in-between if necessary, the bolts being made of metal. The use of a bolt to fix two elongated components means that, once the bolt is loosened, the two elongated components can be rotated with respect to each other: this allows the frame to be folded in a simple intuitive manner, preferably by means of a pre-defined sequence of loosening of the bolts and rotation of the elongated components. In addition, once the bolt has been unscrewed, the elongated components can become separate parts, thus facilitating/ allowing disassembly of the frame. The easy and intuitive assembly and disassembly of the stand furthermore permits packaging of the disassembled or folded stand, thus minimising the overall dimensions during the phases of transport or storage prior to sale.

The framework preferably has the form of an upturned U-shaped structure for supporting the laptop computer, so that a user can sit or lye with his legs, or lower body, or abdomen under the frame which rests, for example, on the same surface on which the user is seated or lying: this allows the user to move his legs in various ways without coming into contact with the frame or with the laptop computer, or being obstructed by it.

According to a particularly preferred embodiment, the framework comprises a horizontal transversal member supported by two uprights, in particular positioned vertically; each upright is fixed to a relative base component, positioned horizontally; the horizontal transversal member supports at least one supporting component.

Preferably, the stand is capable to be such that the laptop computer is fastened to the portable stand thanks to means acting on the bottom side of the computer.

Preferably, means acting on the bottom side of the laptop computer are provided such as adhesion means, suction cups, Velcro-like surfaces, high frictions surfaces and so on.

The use of Velcro-like surfaces is particularly advantageous when also corresponding portions of the bottom of the laptop computer are covered by corresponding Velcro-like surfaces. The same could be obtained, according to different embodiments, by means of other kinds of hook and loop fasteners.

Preferably, the framework presents at least three resting points to support the laptop computer, thus providing a stand for the laptop computer and preventing the rotation, and possibly fall, thereof. Preferably the resting points are provided with adhesion means, such as suction cups or surfaces that are adhesive or have a high coefficient of friction, so as to permit fixing of the laptop computer to said adhesion means. Typically, the resting points are out of line, i.e. positioned at the vertexes of a triangle, so as to permit a simpler stand for the laptop computer, reducing the possibility of tipping over. In addition to said adhesion means, elastic bands and/or clamps can be provided.

It is preferable for two mutually coupled elements to comprise locking means, in particular magnetic, so that after a relative rotation between said two mutually coupled locking elements, they can reciprocally lock in the aligned position.

According to a particularly preferred embodiment, two elongated components are connected to each other by means of an intermediate plate connected to a couple of bolts, each of said bolts being connected also to one of said two elongated components. In this way it is possible to permit double rotations, for example so that to move the rods so as to be parallel and/or substantially adjacent after a total rotation of about 180 degrees.

Further characteristics and advantages of the present invention will become clearer from the description of preferred but not exclusive embodiments of the present invention, illustrated by way of example in the accompanying drawings, in which:
figure 1 shows a perspective view of a stand according to a first embodiment of the invention and a laptop computer for combination with said stand;
figure 2 shows an exploded view of the stand of figure 1;
figure 3 shows a lateral view of the stand of figure 1;
figure 4 shows, in an analogous view to that of figure 3, a particular position of the stand of figure 1;
figure 5 shows a frontal view of the stand of figure 1 in a particular position thereof;
figure 6 shows a further view of the stand of figure 1 partially disassembled;
figure 7 shows a perspective view of a stand according to a second embodiment of the invention;
figure 8 shows a frontal view of the stand of figure 7 in a particular position thereof and partially exploded;
figure 9 shows a perspective view of a third embodiment of the present invention in a first, operation position;
figure 10 shows an approximated perspective view of the embodiment of figure 9 in a second, closed position.

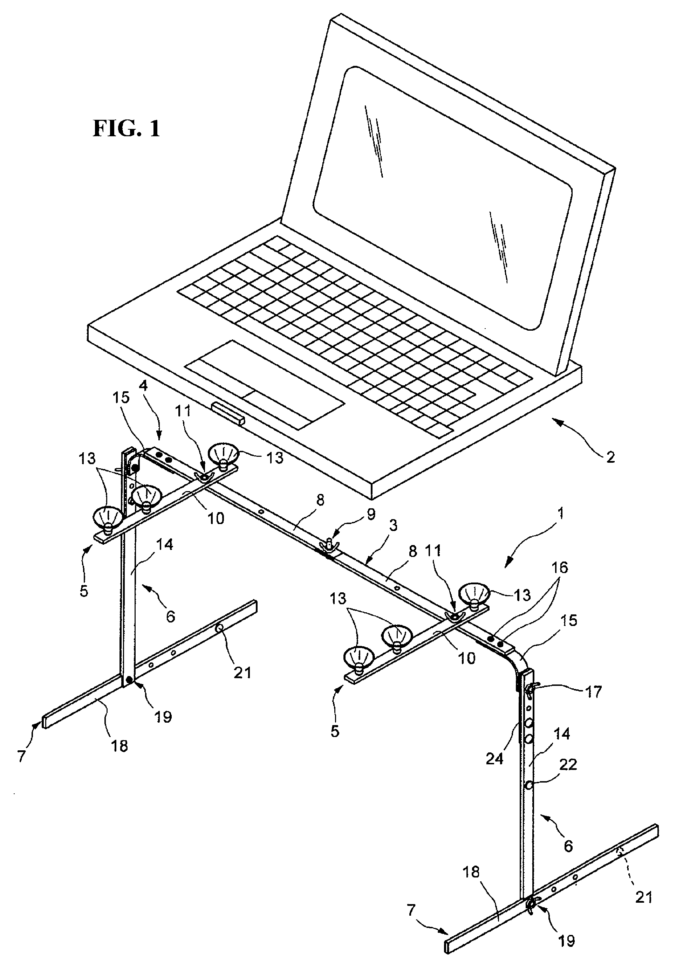

With particular reference to figure 1, a portable stand for a laptop computer, indicated below simply by the term "stand", is represented by the reference number 1. The stand 1 is suitable for supporting a laptop computer 2 so that a user sitting or lying can use the laptop computer 2.

The stand 1 comprises a framework 3 for supporting the laptop computer 2 above the legs, or lower body, or abdomen of the user. The framework 3 is formed of elongated components, which are coupled two by two by means of coupling elements. Said elongated components generally take the form of appropriate wooden, or plastic, or metallic rods, essentially parallelepipedal. Said coupling elements generally take the form of metal bolts comprising screw, butterfly nut and toothed washer.

The framework 3 has an upturned U-shaped structure, which consists of the following:
- a horizontal transversal member 4;
- two supporting arms 5, supported by the horizontal transversal member 4;
- two vertical uprights 6 which support the horizontal transversal member 4;
- two base components 7, positioned horizontally and parallel to each other.

The horizontal transversal member 4 is formed of a pair of rods 8, positioned so that one extends the other and provided with a common hole housing a bolt 9 which rigidly couples the two rods 8.

Each of the two supporting arms 5 is rotatable or can rotate with respect to the horizontal transversal member 4. It has to be noticed that the rotation is obtained about a rotation axis which is perpendicular to the transversal member 4.

Each of the two supporting arms 5 is composed of a rod 10, which is fixed to a respective rod 8 by means of a bolt 11 housed in a hole obtained eccentrically in the rod 10.

The bolts 11 are locking elements which are capable to fix the supporting arms 5 so that they are not capable to rotate, if the bolts 11 are fastened.

Each supporting arm 5 is combined with suction cups 13, which face upwards.

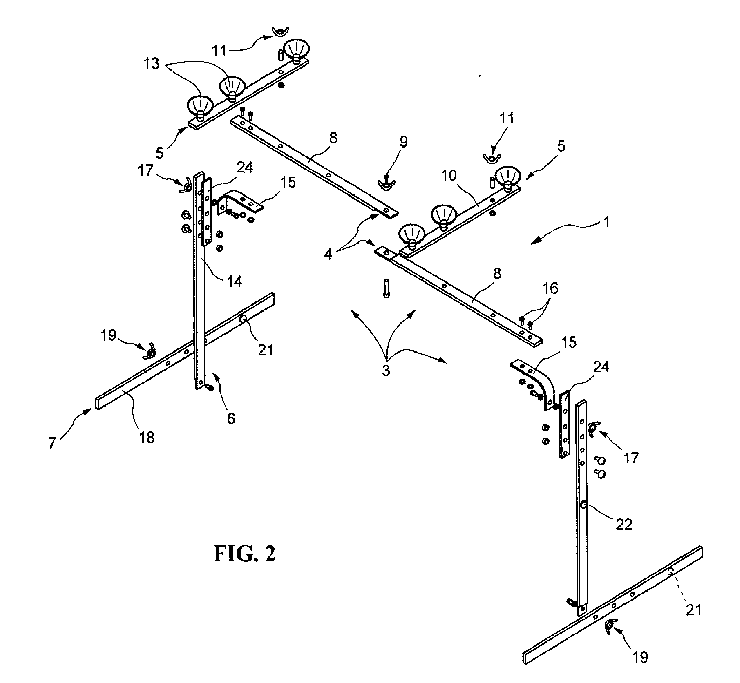

Each of the two vertical uprights 6 is composed of a rod 14 which is connected to one end of the rods 8, in order to support the horizontal transversal member 4, by means of a metal connector element 15, bent in an L-shape and fastened to both the ends of the rods 8 and 14. Fastening is achieved in a simple way since rods 8, 14 and the connector element 15 are provided with holes that can be aligned for housing respective bolts 16 and 17. Preferably bolt 16 is kept fastened to rod 8 and connector element 15, while bolt 17 can be unscrewed to tip the supporting arms 5 to a preferred angle, or to fold alternative embodiments of the stand when not used and/or transported. A metal reinforcement plate 24 is positioned (figure 2) between each rod 6 and each connector element 15. Said reinforcement plate may not be necessary in the alternative embodiment according to which the stand is made of metal hard enough to withstand the wear caused by the relative rotation between metal plates under pressure, in particular due to the effect of the toothed washers.

Each base component 7 is composed of a rod 18, which is fixed to a lower end of a respective upright 6, so as to support the entire frame 3, by means of a bolt 19 housed in a respective hole of the base component 7.

Advantageously, the lower end of the rod 14 is suitable for interlocking with the rod 18 mating with a corresponding shape, so as to improve the reciprocal perpendicular fixing between the upright 6 and the base component 7.

The stand 1 is therefore able to sustain the laptop computer 2 which is positioned above the supporting arms 5 by means of the structure with horizontal transversal member 4, uprights 6 and base components 7. In addition, the suction cups 13 held by the supporting arms adhere to the bottom side of the laptop computer so that the latter is secured in a fixed position, without requiring a bulky base or mounting platform comprising clamps on it.

Advantageously, the supporting of the laptop computer is obtained by six resting points in two parallel or close to parallel rows corresponding to the six suction cups 13 positioned on the supporting arms 5. Furthermore, the fact that the resting points are distributed on either side of the horizontal transversal member 4, allows the centre of gravity of the laptop computer to be as near as possible to the horizontal transversal member 4, permitting improved balancing of the weight and avoidance of torques which tend to force rotation of the horizontal transversal member 4 and produce excessive stress on the supporting arms 5, or on the base components 7.

In addition, apart from the adhesion means such as suction cups or adhesive surfaces, the supporting components can be provided with further simple fixing elements, such as elastic bands and clamps.

In addition, the base components 7 are able to counter tipping of the entire structure forwards or backwards: this is due to their elongated form and their positioning in a direction perpendicular to the horizontal transversal member 4.

The weight of the laptop computer is discharged in roughly equal parts between the two uprights, due to the upturned U-shaped symmetry of the framework 3, thus countering torques which tend to tip the framework 3 towards the right or the left.

During use, the bolts 9, 11, 17, 19 maintain the rods 8, 10, 14, 18 rigidly fixed in their reciprocal positions. Advantageously, the bolts 9, 11, 17, 19 can be unscrewed so as to separate each screw from the respective nut, thus separating the rods 8, 10, 14, 18 which in this way become independent parts. This facilitates assembly/disassembly to a degree previously unknown. Furthermore, once separated, the rods 8, 10, 14, 18 can be grouped in a small space and can be contained, for example, in a small bag and in particular in the same bag as the one containing the laptop computer 2, positioned beside the latter.

In addition, advantageously, each bolt 9, 11, 17, 19 can be loosened to permit relative rotation between the two rods coupled by the bolt so that said rods swivel around said bolt.

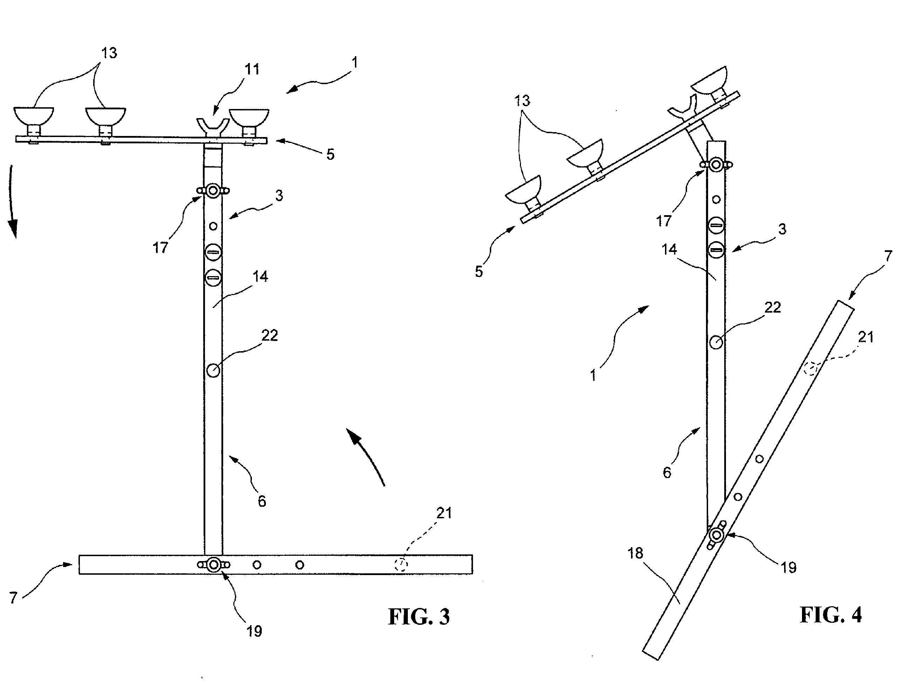

In particular, once the two bolts 19 (figure 4) have been loosened, the respective rod 18 swivels around said bolt 19, so that it can become aligned with rod 14 and partially overlap with it. Likewise, once each bolt 11 has been loosened, the respective supporting arm 5 swivels around said bolt 11, so that it can become aligned with rod 8 and partially overlap with it.

Bolt 9 can also be loosened, allowing the two rods 8 to swivel and rotate to almost overlapping position, or it can be un-screwed allowing to separate the two rods 8 from each other and to split the stand in two separate symmetrical half frames (20).

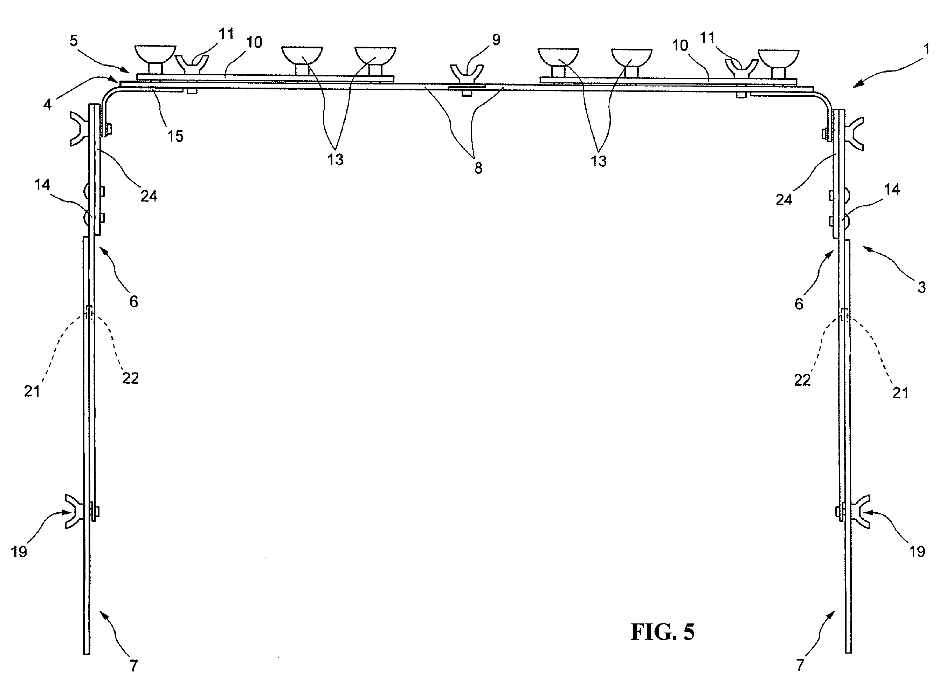

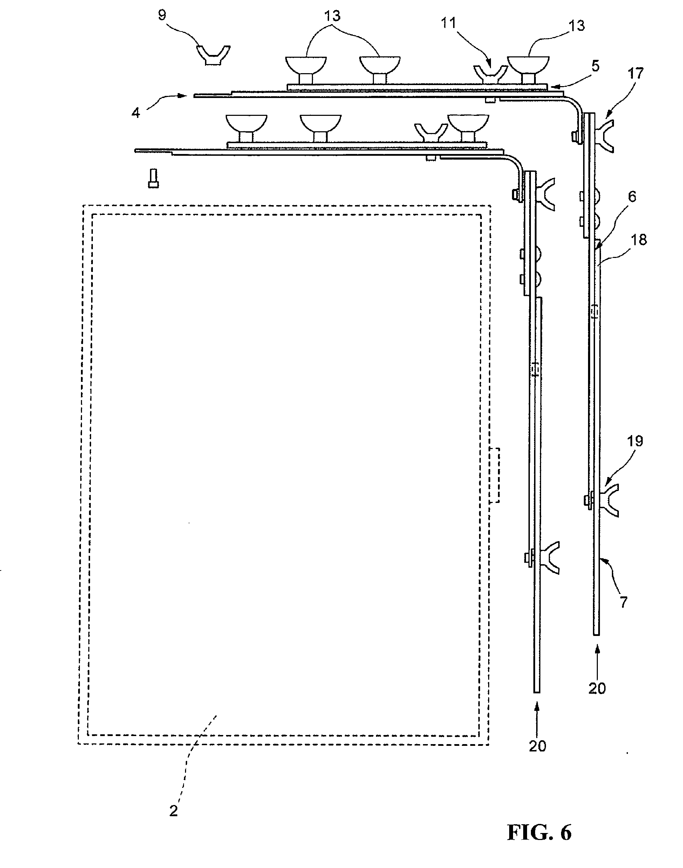

Furthermore, once the laptop computer 2 has been removed, the frame 3 can be folded and disassembled according to the following sequence of operations:
- rotate the base components 7 so that the base components 7 are aligned with and partially overlapping the uprights 6;
- rotate the supporting arms 5 so that the supporting arms 5 are aligned with the horizontal transversal member 4 (figure 5), substantially overlapping;
- unscrew the bolt 9 so as to obtain two half frames 20, L-shaped and of dimensions comparable with those of the laptop computer 2 (figure 6).

In this way it is possible to disassemble/fold the stand 1 around the laptop computer 2 in a simple and rapid manner.

Furthermore, it is possible to temporarily loosen the bolts 17 (comprising the toothed washers which allow the desired angle to be more effectively maintained) thus permitting rotation of the horizontal transversal member 4 and setting of the supporting arms 5 to the preferred angle; when the bolts 17 are re-tightened, the angle of the supporting arms 5 becomes stable and can support the laptop computer 2 with inclined keyboard according to the typical angle of office keyboards, thus further increasing user comfort.

Advantageously, each rod 18 comprises a permanent magnet 21 and each rod 14 comprises a further permanent magnet 22, said magnets 21, 22 being positioned and oriented so that when the rods 14 and 18 are aligned due to a rotation, the permanent magnets 21 and 22 attract each other, reciprocally locking the rods 14 and 18; to overcome said force of attraction, a force higher than a pre-set threshold must be used. It is also possible to replace one of the permanent magnets 21, 22 with a ferromagnetic plate which can magnetise and reciprocally lock the rods 14 and 18.

In dimensional terms, the rods 8, 14 and 18 measure approximately 25 cm, which means that the horizontal transversal member 4 and consequently the laptop computer 2 is raised approximately 25 cm from the surface on which the user is sitting and the distance between the vertical uprights 6 is approximately 50 cm, compatible with the size of the legs and lower body of a person of medium build; at the same time, the screen of the laptop computer 2 is nearer the user's eyes than during use without the stand according to the present invention. The supporting arms 5 are approximately 15 cm long, which allows the laptop computer 2 to be easily positioned on the framework 3. The overall dimensions of the half frames 20 are comparable with those of the laptop computer.

Furthermore, advantageously, the rods 14 and 18 comprise a plurality of holes in succession, each of which can be used for a respective bolt 17 or 19, so as to permit appropriate setting of the dimension of the framework 3, in order to better balance it and cope with different sizes of users.

A variation of the embodiment involves the use of a short plate joint, fixed to two bolts, which joins at the centre the pair of rods 8 and permits the double rotation of said rods 8 towards each other until they are reciprocally parallel, thus allowing the transversal member 4 to be folded in a small space.

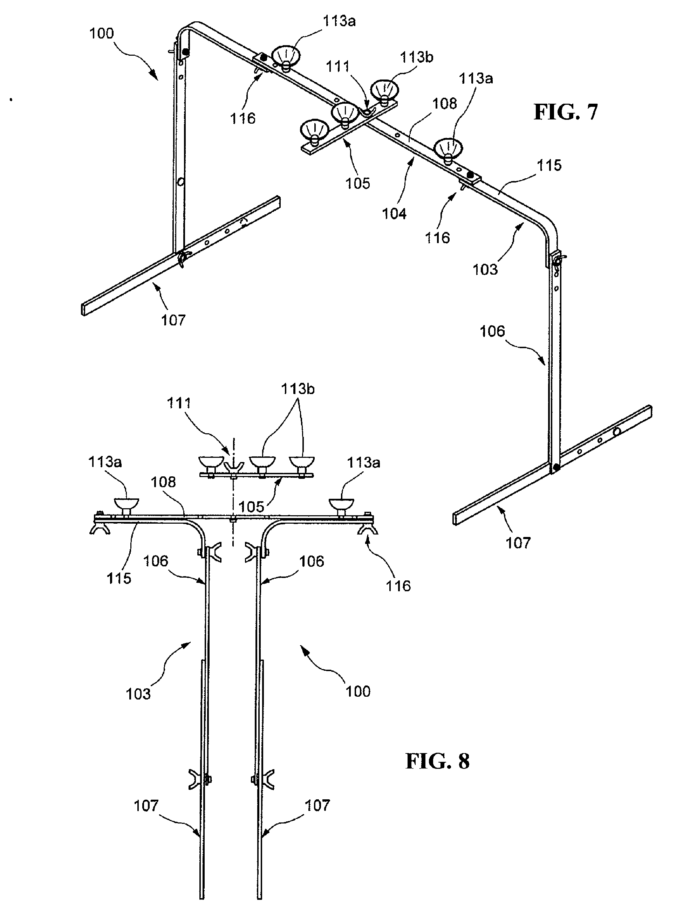

With reference to figures 7 and 8, a second embodiment of the present invention is illustrated.

In particular, a stand 100 comprises a framework 103 composed of elongated components consisting of metal sections, substantially plate-like, and with coupling elements consisting of metal bolts with butterfly nut. The framework has an upturned U-shaped structure, featuring a horizontal transversal member 104, one single supporting arm 105 supported by the horizontal transversal member 104, two vertical uprights 106 for supporting the horizontal transversal member 104 and two base components 107 respectively integral with the vertical uprights 106.

The horizontal transversal member 104 comprises a section 108, provided at the ends with holes housing bolts 116 which fix the section 108 to corresponding ends of a pair of metal connectors 115, each of which is bent in an L shape so as to be coupled, at a further end, to one of the respective vertical uprights 106, each of which is coupled to one of the respective base components 107; vertical uprights 106, base components 107 and the reciprocal coupling system are substantially analogous to what has already been illustrated in the description of the first embodiment, apart from the component material. The horizontal transversal member directly supports two suction cups 113a.

The horizontal transversal member 104 is provided with a hole housing a bolt 111 for coupling with a supporting arm 105, which supports three suction cups 113b, respectively aligned so that at least one suction cup 113b is on one side and at least one suction cup 113b is on the other side of the horizontal transversal member 104.

The suction cups 113a and 113b represent five resting points for the laptop computer; it should be noted that at least three suction cups are respectively misaligned (for example considering the suction cups 113a and only one of the suction cups 113b).

During use, the bolts of the frame are tightened so as to maintain the respective sections fixed. At the end of use, the stand 100 can be closed as follows:
- rotate the base components 107 until they partially overlap the uprights 106;
- rotate the supporting arm 105 until it aligns with the horizontal transversal member 4, substantially overlapping;
- rotate the connectors 115 around the bolt 116 in order to tip the uprights until a flat T-shaped figure is obtained, as shown in figure 8

Also the present embodiment, therefore, allows the stand to be folded to a configuration with reduced overall dimensions.

Furthermore, advantageously, the rods 107 and 106 comprise a plurality of holes in succession, each of which can be used for a respective bolt, to permit setting of the dimension of the framework 3, better balance it, and cope with different sizes of users.

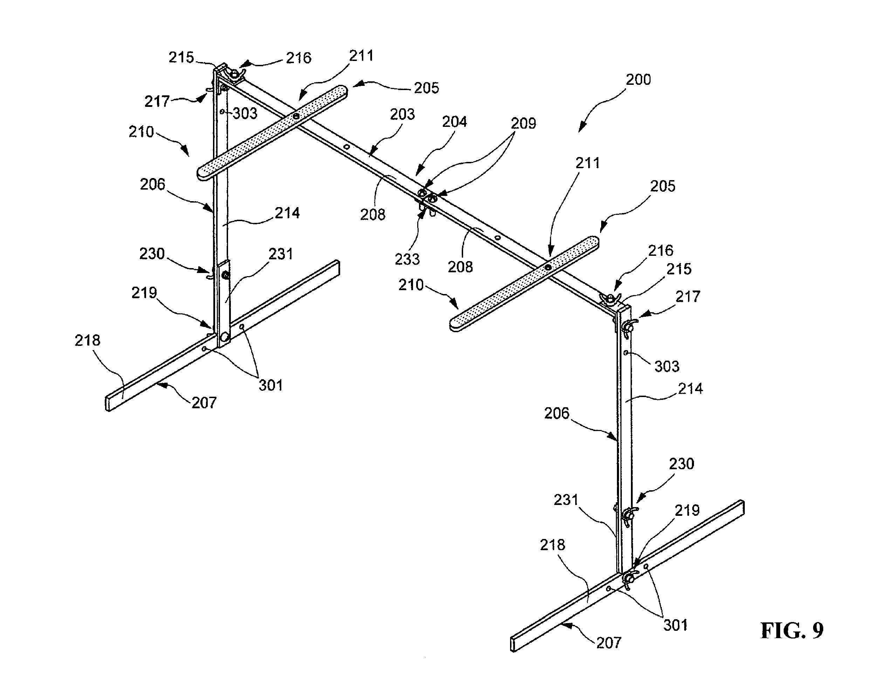

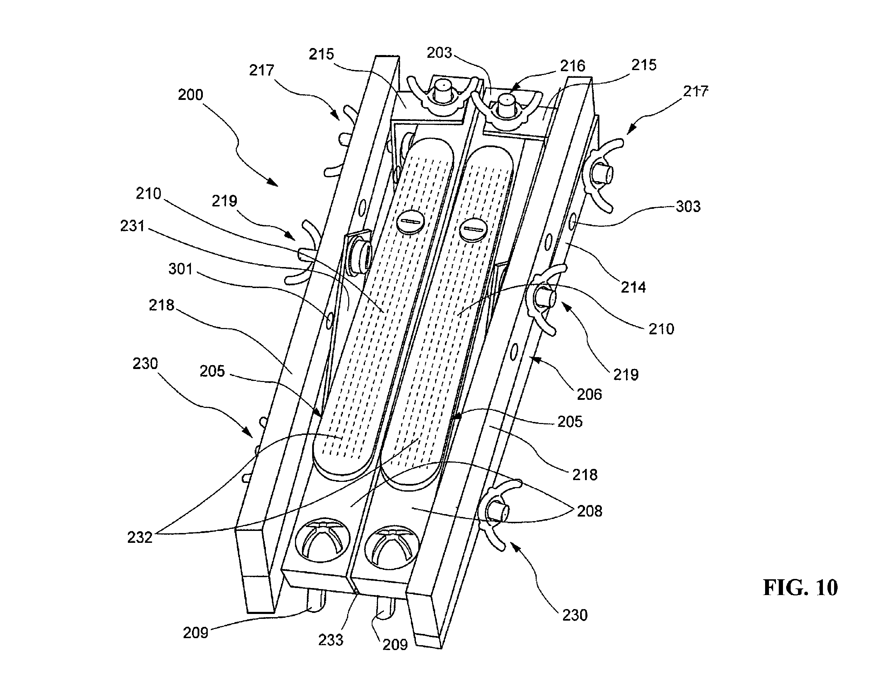

The third embodiment illustrated by the figures 9-10 is such as it is possible to support a laptop computer when the stand is used (figure 9) but when the stand is not used (figure 10) the stand is foldable so that it can be inserted into a pocket of a user without disassembling any of the components of the stand.

In use, the stand 200 has an upturned U-shaped structure, which consists of the following:
- a horizontal transversal member 204;
- two rotatable supporting arms 205, sustained by the horizontal transversal member 204;
- two vertical uprights 206 which support the horizontal transversal member 204;
- two base components 207, positioned horizontally and parallel to each other.

The horizontal transversal member 204 is formed of a pair of rods 208, positioned so that one extends the other.

The two rods 208 are mutually connected by means of an intermediate plate 233 and a couple of bolts 209, each of which is housed within a hole of a rod 208 and a hole of the intermediate plate 233. In this way, by loosening the bolts 209, it is possible to double rotate the rods 208 until they are parallel and substantially adjacent.

Advantageously, the length of the intermediate plate 233 does not exceed the total width of the two adjacent rods 208 in the folded position, so that, when the stand 200 is folded, the intermediate plate 233 does not appear to protrude.

Each of the two supporting arms 205 is rotatable with respect to the horizontal transversal member 204. The rotation of a supporting arm 205 is obtained about a rotation axis which is perpendicular to the transversal member 204.

Each of the two supporting arms 205 is composed of a rod 210, which is fixed to a respective rod 208 by means of a bolt 211 housed in a hole obtained eccentrically in the rod 210.

Each supporting arm 205 is covered by a layer 232 made of Velcro-like material. If the bottom side of the laptop computer has been covered, at least partially, by Velcro-like layers placed in coincidence with the Velcro-like layer 232, it is possible that the computer is fastened to the stand 200 in a very simple and efficient way.

Each of the two vertical uprights 206 is composed of a rod 214 which is connected to an external end of a respective rod 208. The support of the horizontal transversal member 204 is achieved by means of a metal connector element 215, bent in an L-shape and fixed to both the ends of the rods 208 and 214, which are provided with holes for housing respective bolts 216 and 217.

Advantageously, the metal connector section 215 has a first end with a hole for housing the bolt 216; advantageously, said first end is placed on the transversal member 204.

Advantageously, the metal connector section 215 has a second end with a U-shaped edge defming a passage for housing the bolt 217; advantageously, said second end is internally adjacent to the rod 214. In this way, it is possible, by loosening the bolts 217, to disassemble the transversal member 204 from the uprights 206 without removing the screws and nuts.

Alternatively, the U-shaped edges could be replaced by holes for housing the bolts 217, which would still allow the folding of the stand; but in case a user wished to disassociate the transversal member 204 from the uprights 208, the complete opening of the bolts 217 would be needed.

Advantageously, by loosening both the bolts 217, the transversal member 204 is rotatable about a horizontal rotation axis, so as to permit the user to decide the inclination level of the keyboard of the laptop computer sustained by the stand 200.

By loosening the bolts 216 and then the bolts 217, it is possible to double-rotate the rods 214 with respect to the rods 208 so that they become substantially parallel to each other, see figure 10.

Each base component 207 is composed of a rod 218, each of which is fixed to a lower end of a respective upright 206, so as to support the entire frame 203.

Advantageously, the lower extremity of each upright 206 is adjacent and supported by the base component 207.

Each base component 207 is rigidly fixed to a respective upright 206 by means of a connecting plate 231, which is connected to the base component 207 by means of a bolt 219 and to the upright 206 by means of a bolt 230.

In this way, by loosening both the bolts 219, 230, it is possible to double rotate the base component 207 so that it becomes substantially parallel and adjacent to the relative upright 206, see figure 10.

Some additional holes 303 can be present in the uprights 214 so that to permit fixing the transversal member 204 at different heights, for coping with different sizes of users.

A plurality of holes 301 defining alternative positions for the bolts 219 is provided, which gives the user the possibility of choosing the preferred position of the uprights 206 with respect to the base components 207. Alternatively, U-shaped edges allowing to disassemble the uprights 206 from the base components 207, by only loosening the bolts 219, could also be used instead of the holes 301.

The present embodiment permits the stand 200 to be folded in the following way from an operation position (figure 9) to a closed position (figure 10), so that it can be put into a pocket:
- rotation of the supporting arms 205 (after bolts 211 have been loosened);
- double rotation of the connecting plate 231 and of the base components 207 over the uprights 206 (after bolts 219, 230 have been loosened);
- double rotation of the uprights 206 and base components 207 (after bolts 216, 217 have been loosened) parallel to the rods 208.
- double rotation of the rods 208 over each other (after the bolts 209 have been loosened).

The portable stand according to the invention finds use not only to support a laptop computer but also to support other electronic devices such as CD/DVD readers, flat TV screens and even objects such as trays or dishes. Therefore the portable stand according to the invention proves to be very helpful to elder people or bedridden people.

On the basis of the description provided, other characteristics, modifications or improvements are possible and evident to a person averagely skilled in the art. Said characteristics, modifications and improvements should therefore be considered part of the present model. In practice, any materials, dimensions and contingent forms can be used according to requirements and the state of the art.

## Claims

1. Portable stand (1; 100; 200) for a laptop computer or other electronic devices to be used by a person who is sitting, lying or reclined, **characterised by** comprising an upturned U-shaped framework (3; 103; 203) for supporting a laptop computer (2) above the legs, or lower body, or abdomen of said person, wherein said framework (3; 103; 203) comprises a horizontal transversal member (4; 104; 204) supported by two uprights (6; 106; 206), said horizontal transversal member (4; 104; 204) supporting at least one rotatable supporting arm (5; 105; 205) for sustaining said laptop computer (2), wherein said at least one rotatable supporting arm is rotatable about a rotation axis which is perpendicular to said transversal member (4; 104; 204) so as to overlap said horizontal transversal member (4; 104; 204) and wherein said framework (3; 103; 203) comprises of elongated components (8, 10, 14; 105, 106, 108; 205, 206, 208, 210, 214) which are coupled by means of coupling elements (9, 11, 17; 111, 116; 209, 211, 216,217).

2. Portable stand according to claim 1 wherein at least one of said coupling elements (9, 11, 17, 19; 111, 116; 209, 211, 216, 217, 219, 230) is capable to maintain the relative elongated components (8, 10, 14, 18; 105, 106, 107, 108; 205, 206, 207 208, 210, 214, 218) rigidly fixed.

3. Portable stand according to one of the claims 1 or 2, wherein at least one of said coupling elements (9, 11, 17, 19; 111, 116; 209, 211, 216, 217, 219, 230) is reconfigurable or loosenable so as to permit a relative rotation between the elongated components (8, 10, 14, 18; 105, 106, 107, 108; 205, 206, 207, 208, 210, 214, 218) associated with said at least one coupling element (9, 11, 17, 19; 111, 116; 209, 211, 216, 217, 219, 230).

4. Portable stand according to one of the claims 2 or 3, wherein at least one coupling element (9, 11, 17, 19; 111, 116; 209, 211, 216, 217, 219, 230) is releasable so as to permit separation of the relative elongated components (8, 10, 14, 18; 105, 106, 107, 108; 205, 206, 207, 208, 210, 214, 218).

5. Portable stand according to one of the claims 2-4, wherein at least one coupling element (9, 11, 17, 19; 111, 116; 209, 211, 216, 217, 219, 230) is a bolt, which:
- is able to maintain the relative elongated components (8, 10, 14, 18; 105, 106, 107, 108; 205, 206, 207, 208, 210, 214, 218) fixed when said bolt is tightened;
- is loosenable so as to permit a relative rotation between the relative elongated components (8, 10, 14, 18; 105, 106, 107, 108; 205, 206, 207, 208, 210, 214, 218);
- is unscrewable so as to permit separation of the relative elongated components (8, 10, 14, 18; 105, 106, 107, 108; 205, 206, 207, 208, 210, 214, 218).

6. Portable stand according to one of the preceding claims, wherein said framework (3; 103; 203) is provided with at least three resting points to support said laptop computer (2).

7. Portable stand according to claim 6, wherein said resting points are positioned on said supporting arms (5; 105; 205) and/or on said horizontal transversal member (4; 104; 204) and comprise adhesion means to exert an adhesion force to the bottom side of said laptop computer (2) for adhesion of said laptop computer (2).

8. Portable stand according to claim 7, wherein said adhesion means is selected from suction cups (13; 113a, 113b), hook and loop fasteners or Velcro-like surfaces (232), for adhesion of said laptop computer (2).

9. Portable stand according to any of the preceding claims, wherein said uprights comprise rods connected to respective external ends of said horizontal transversal member.

10. Portable stand according to one of the preceding claims, wherein said uprights (6; 106; 206) are fixed to two horizontal and mutually parallel base components (7; 107; 207).

11. Portable stand according to claim 10, wherein each of said base components (7; 107; 207) is rotatable so as to overlap, at least partially, the respective upright (6; 106; 206).

12. Portable stand according to one of the preceding claims, wherein said horizontal transversal member (4; 104; 204) is tippable to obtain the required inclination of said supporting arms (5; 105; 205).

13. Portable stand according to one of the preceding claims, wherein said horizontal transversal member (4; 104; 204) is adjustable in height with respect to said two uprights (6; 106; 206).

14. Portable stand according to one or more of claims from 3 to 13, wherein two reciprocally coupled elongated components (14, 18; 106, 107, 214, 218) comprise locking means (21, 22), in particular magnetic locking means, such that a relative rotation between said two elongated components (14, 18; 106, 107, 214, 218) is lockable when said two elongated components overlap (21, 22).

15. Portable stand according to one of the preceding claims, wherein said elongated components (8, 10, 14, 18; 105, 106, 107, 108; 208, 210, 214, 218) are chosen from sections, strips, rods, slats, plates or sheets, the material of said elongated components being chosen among metallic, wood or plastic materials.

16. Portable stand according to one of the preceding claims, wherein at least two of said elongated components are mutually connected also by means of an intermediate plate (15; 115, 215, 231, 233) connected to a couple of bolts, each of said bolts being connected also to one of said two elongated components.

## Patentansprüche

1. Tragbarer Ständer (1; 100; 200) für einen Laptop-Computer oder andere elektronische Geräte, die von einer sitzenden, liegenden oder zurückgelehnten Person verwendet werden sollen, **dadurch gekennzeichnet, dass** er einen umgedrehten U-förmigen Rahmen (3; 103; 203) zum Tragen eines Laptop-Computers (2) über den Beinen oder dem Unterkörper oder dem Bauch der Person aufweist, wobei der Rahmen (3; 103; 203) ein horizontales transversales Element (4; 104; 204) aufweist, das von zwei Stützen (6; 106; 206) gestützt wird, wobei das horizontale transversale Element (4; 104; 204) zumindest einen drehbaren Stützarm (5; 105; 205) stützt, um den Laptop-Computer (2) zu tragen, wobei der zumindest eine drehbare Stützarm um eine Drehachse drehbar ist, die senkrecht zu dem transversalen Element (4; 104; 204) ist, so dass er sich mit dem horizontalen transversalen Element (4; 104; 204) überlappt, und wobei der Rahmen (3; 103; 203) gestreckte Komponenten (8, 10, 14; 105, 106, 108; 205, 206, 208, 210, 214) aufweist, die mittels Kopplungselementen (9, 11, 17; 111, 116; 209, 211, 216, 217) gekoppelt sind.

2. Tragbarer Ständer nach Anspruch 1, wobei zumindest eines der Kopplungselemente (9, 11, 17, 19; 111, 116; 209, 211, 216, 217, 219, 230) in der Lage ist, die relativen gestreckten Komponenten (8, 10, 14, 18; 105, 106, 107, 108; 205, 206, 207, 208, 210, 214, 218) starr befestigt zu halten.

3. Tragbarer Ständer nach einem der Ansprüche 1 oder 2, wobei zumindest eines der Kopplungselemente (9, 11, 17, 19; 111, 116; 209, 211, 216, 217, 219, 230) rekonfigurierbar oder lockerbar ist, so dass eine relative Drehung zwischen den gestreckten Komponenten (8, 10, 14, 18; 105, 106, 107, 108; 205, 206, 207, 208, 210, 214, 218), die dem zumindest einen Kopplungselement (9, 11, 17, 19; 111, 116; 209, 211, 216, 217, 219, 230) zugeordnet sind, ermöglicht wird.

4. Tragbarer Ständer nach einem der Ansprüche 2 oder 3, wobei zumindest ein Kopplungselement (9, 11, 17, 19; 111, 116; 209, 211, 216, 217, 219, 230) lösbar ist, so dass eine Trennung der relativen gestreckten Komponenten (8, 10, 14, 18; 105, 106, 107, 108; 205, 206, 207, 208, 210, 214, 218) ermöglicht wird.

5. Tragbarer Ständer nach einem der Ansprüche 2 bis 4, wobei zumindest ein Kopplungselement (9, 11, 17, 19; 111, 116; 209, 211, 216, 217, 219, 230) eine Schraube ist, die
• in der Lage ist, die relativen gestreckten Komponenten (8, 10, 14, 18; 105, 106, 107, 108; 205, 206, 207, 208, 210, 214, 218) befestigt zu halten, wenn die Schraube angezogen wird;
• lockerbar ist, so dass eine relative Drehung zwischen den relativen gestreckten Komponenten (8, 10, 14, 18; 105, 106, 107, 108; 205, 206, 207, 208, 210, 214, 218) ermöglicht wird;
• abschraubbar ist, so dass eine Trennung der relativen gestreckten Komponenten (8, 10, 14, 18; 105, 106, 107, 108; 205, 206, 207, 208, 210, 214, 218) ermöglicht wird.

6. Tragbarer Ständer nach einem der vorgenannten Ansprüche, wobei der Rahmen (3; 103; 203) über zumindest drei Haltepunkte verfügt, um den Laptop-Computer (2) zu tragen.

7. Tragbarer Ständer nach Anspruch 6, wobei die Haltepunkte auf den Stützarmen (5; 105; 205) und/oder dem horizontalen transversalen Element (4; 104; 204) positioniert sind und Haftmittel aufweisen, um eine Haftkraft auf die Unterseite des Laptop-Computers (2) auszuüben, um den Laptop-Computer (2) festzuhalten.

8. Tragbarer Ständer nach Anspruch 7, wobei das Haftmittel aus Saugnäpfen (13; 113a, 113b), Klettverschlüssen oder Klettoberflächen (232) ausgewählt wird, um den Laptop-Computer (2) festzuhalten.

9. Tragbarer Ständer nach einem der vorgenannten Ansprüche, wobei die Stützen Stäbe aufweisen, die mit jeweiligen äußeren Enden des horizontalen transversalen Elements verbunden sind.

10. Tragbarer Ständer nach einem der vorgenannten Ansprüche, wobei die Stützen (6; 106; 206) an zwei horizontalen und zueinander parallelen Basiskomponenten (7; 107; 207) befestigt sind.

11. Tragbarer Ständer nach Anspruch 10, wobei jede der Basiskomponenten (7; 107; 207) drehbar ist, so dass sie sich zumindest teilweise mit der jeweiligen Stütze (6; 106; 206) überlappt.

12. Tragbarer Ständer nach einem der vorgenannten Ansprüche, wobei das horizontale transversale Element (4; 104; 204) kippbar ist, um die benötigte Neigung der Stützarme (5; 105; 205) zu erreichen.

13. Tragbarer Ständer nach einem der vorgenannten Ansprüche, wobei das horizontale transversale Element (4; 104; 204) mit Bezug auf die zwei Stützen (6; 106; 206) höhenverstellbar ist.

14. Tragbarer Ständer nach einem oder mehreren der Ansprüche 3 bis 13, wobei zwei reziprok gekoppelte gestreckte Komponenten (14, 18; 106, 107, 214, 218) Sperrmittel (21, 22), im besonderen magnetische Sperrmittel, aufweisen, so dass eine relative Drehung zwischen den zwei gestreckten Komponenten (14, 18; 106, 107, 214, 218) sperrbar ist, wenn sich die zwei gestreckten Komponenten überlappen (21, 22).

15. Tragbarer Ständer nach einem der vorgenannten Ansprüche, wobei die gestreckten Komponenten (8, 10, 14, 18; 105, 106, 107, 108; 208, 210, 214, 218) aus Abschnitten, Streifen, Stäben, Leisten, Platten oder Blechen ausgewählt werden und das Material der gestreckten Komponenten aus Metall-, Holz- oder Kunststoffmaterialien ausgewählt wird.

16. Tragbarer Ständer nach einem oder mehreren der vorgenannten Ansprüche, wobei zumindest zwei der gestreckten Komponenten auch über eine Zwischenplatte (15; 115, 215, 231, 233) miteinander verbunden sind, die mit einigen Schrauben verbunden ist, wobei jede der Schrauben auch mit einer der zwei gestreckten Komponenten verbunden ist.

## Revendications

1. Support portatif (1 ; 100 ; 200) pour un ordinateur portable ou d'autres dispositifs électroniques à utiliser par une personne qui est assise, couchée ou inclinée, **caractérisé en ce qu'**il comprend un bâti (3 ; 103 ; 203) en forme de U tourné vers le haut pour supporter un ordinateur portable (2) au-dessus des jambes, ou du bas du corps, ou de l'abdomen de ladite personne, dans lequel ledit bâti (3 ; 103 ; 203) comprend un élément transversal horizontal (4 ; 104 ; 204) supporté par deux montants (6 ; 106 ; 206), ledit élément transversal horizontal (4 ; 104 ; 204) supportant au moins un bras de support rotatif (5 ; 105 ; 205) pour soutenir ledit ordinateur portable (2), dans lequel ledit au moins un bras de support rotatif peut tourner autour d'un axe de rotation qui est perpendiculaire au dit élément transversal (4 ; 104 ; 204) de manière à chévaucher ledit élément transversal horizontal (4 ; 104 ; 204), et dans lequel ledit bâti (3 ; 103 ; 203) comprend des composants allongés (8, 10, 14 ; 105, 106, 108 ; 205, 206, 208, 210, 214) qui sont accouplés au moyen d'éléments d'accouplement (9, 11, 17 ; 111, 116 ; 209, 211, 216, 217).

2. Support portatif selon la revendication 1, dans lequel au moins l'un desdits éléments d'accouplement (9, 11, 17, 19 ; 111, 116 ; 209, 211, 216, 217, 219, 230) est capable de maintenir les composants allongés (8, 10, 14, 18 ; 105, 106, 107, 108 ; 205, 206, 207 208, 210, 214, 218) respectifs rigidement fixes.

3. Support portatif selon l'une des revendications 1 ou 2, dans lequel au moins l'un desdits éléments d'accouplement (9, 11, 17, 19 ; 111, 116 ; 209, 211, 216, 217, 219, 230) est reconfigurable ou desserrable de manière à permettre une rotation relative entre les composants allongés (8, 10, 14, 18 ; 105, 106, 107, 108 ; 205, 206, 207, 208, 210, 214, 218) associés au dit au moins un élément d'accouplement (9, 11, 17, 19 ; 111, 116 ; 209, 211, 216, 217, 219, 230).

4. Support portatif selon l'une des revendications 2 et 3, dans lequel au moins un élément d'accouplement (9, 11, 17, 19 ; 111, 116 ; 209, 211, 216, 217, 219, 230) est libérable de manière à permettre une séparation des composants allongés (8, 10, 14, 18 ; 105, 106, 107, 108 ; 205, 206, 207, 208, 210, 214, 218) respectifs.

5. Support portatif selon l'une des revendications 2 à 4, dans lequel au moins un élément d'accouplement (9, 11, 17, 19 ; 111, 116 ; 209, 211, 216, 217, 219, 230) est un boulon, qui :
• est capable de maintenir les composants allongés (8, 10, 14, 18 ; 105, 106, 107, 108 ; 205, 206, 207, 208, 210, 214, 218) respectifs fixes lorsque ledit boulon est serré ;
• est desserrable de manière à permettre une rotation relative entre les composants allongés (8, 10, 14, 18 ; 105, 106, 107, 108 ; 205, 206, 207, 208, 210, 214, 218) respectifs ;
• est dévissable de manière à permettre une séparation des composants allongés (8, 10, 14, 18 ; 105, 106, 107, 108 ; 205, 206, 207, 208, 210, 214, 218) respectifs.

6. Support portatif selon l'une quelconque des revendications précédentes, dans lequel ledit bâti (3 ; 103 ; 203) est pourvu d'au moins trois points d'appui pour supporter ledit ordinateur portable (2).

7. Support portatif selon la revendication 6, dans lequel lesdits points d'appui sont positionnés sur lesdits bras de support (5 ; 105 ; 205) et/ou sur ledit élément transversal horizontal (4 ; 104 ; 204) et comprennent des moyens d'adhérence pour exercer une force d'adhérence vers le côté inférieur dudit ordinateur portable (2) pour l'adhérence dudit ordinateur portable (2).

8. Support portatif selon la revendication 7, dans lequel lesdits moyens d'adhérence sont sélectionnés parmi des ventouses (13 ; 113a, 113b), des dispositifs de fixation à crochets et boucles ou des surfaces de type Velcro (232), pour l'adhérence dudit ordinateur portable (2).

9. Support portatif selon l'une des revendications précédentes, dans lequel lesdits montants comprennent des tiges reliées aux extrémités externes respectives dudit élément transversal horizontal.

10. Support portatif selon l'une des revendications précédentes, dans lequel lesdits montants (6 ; 106 ; 206) sont fixés à deux composants de base (7 ; 107 ; 207) horizontaux et mutuellement parallèles.

11. Support portatif selon la revendication 10, dans lequel chacun desdits composants de base (7 ; 107 ; 207) peut tourner de manière à chévaucher, au moins partiellement, le montant (6 ; 106 ; 206) respectif.

12. Support portatif selon l'une des revendications précédentes, dans lequel ledit élément transversal horizontal (4 ; 104 ; 204) peut être incliné pour obtenir l'inclinaison nécessaire desdits bras de support (5 ; 105 ; 205).

13. Support portatif selon l'une des revendications précédentes, dans lequel ledit élément transversal horizontal (4 ; 104 ; 204) est ajustable en hauteur par rapport aux dits deux montants (6 ; 106 ; 206).

14. Support portatif selon une ou plusieurs des revendications 3 à 13, dans lequel deux composants allongés (14, 18 ; 106, 107, 214, 218) accouplés réciproquement comprennent des moyens de verrouillage (21, 22), en particulier des moyens de verrouillage magnétiques, de sorte qu'une rotation relative entre lesdits deux composants allongés (14, 18 ; 106, 107, 214, 218) puisse être verrouillée lorsque lesdits deux composants allongés (21, 22) se superposent.

15. Support portatif selon l'une quelconque des revendications précédentes, dans lequel lesdits composants allongés (8, 10, 14, 18 ; 105, 106, 107, 108 ; 208, 210, 214, 218) sont choisis parmi des sections, des bandes, des tiges, des lamelles, des plaques ou des feuilles, le matériau desdits composants allongés étant choisi parmi des métaux, du bois ou des matières plastiques.

16. Support portatif selon l'une quelconque des revendications précédentes, dans lequel au moins deux desdits composants allongés sont reliés mutuellement également au moyen d'une plaque intermédiaire (15 ; 115, 215, 231, 233) reliée à un couple de boulons, chacun desdits boulons étant relié également à l'un desdits deux composants allongés.
